# EUROPÄISCHE PATENTANMELDUNG

(11) **EP 4 269 014 A1**
(43) Veröffentlichungstag der Anmeldung: **01.11.2023**
(21) Anmeldenummer: 22169892.1
(22) Anmeldetag: 26.04.2022
(51) Int. Cl.: B23K 9/095, B23K 9/10, B23K 9/12, B23K 9/173

(54) **SCHWEISSVORRICHTUNG, ROBOTER-SCHWEISSSYSTEM UND VERFAHREN ZUM FÖRDERN EINER DRAHTELEKTRODE MIT HOCHGENAUER STICKOUT-EINSTELLUNG**

(71) Anmelder: FRONIUS INTERNATIONAL GmbH, 4643 Pettenbach (AT)
(72) Erfinder: Binder, Manuel, 4643 Pettenbach (AT); Waldhör, Andreas, 4643 Pettenbach (AT); Stumpfl, Christian, 4643 Pettenbach (AT)
(74) Vertreter: Bratovic, Nino Maria

(57) **Zusammenfassung**

Die Erfindung stellt eine Schweißvorrichtung (100) sowie ein Verfahren zum Fördern einer Drahtelektrode (1) in eine Position mit einer definierten freien Drahtelektrodenlänge (S) ab einem Kontaktrohr (141) eines Schweißbrenners (140) einer Schweißvorrichtung (100) bereit. Eine Information über eine Spannungsänderung zwischen der Drahtelektrode (1) einerseits und einer Referenzelektrode (160) andererseits wird dazu verwendet, um eine Position des Drahtelektrodenendes (2) zum Zeitpunkt der Spannungsänderung zu bestimmen. Daraufhin kann die Drahtelektrode präzise in die gewünschte Position gefördert werden.

## Beschreibung

### Technisches Gebiet

Die vorliegende Erfindung betrifft eine Schweißvorrichtung mit hochgenauer Stickout-Einstellung, ein Roboter-Schweißsystem mit hochgenauer Stickout-Einstellung und ein Verfahren zum Fördern einer Drahtelektrode mit hochgenauer Stickout-Einstellung. Unter "Stickout" ist eine freie Drahtelektrodenlänge der Drahtelektrode ab einem Kontaktrohrende eines Kontaktrohrs eines Schweißbrenners der Schweißvorrichtung zu verstehen.

### Technischer Hintergrund

Bei vielen Schweißvorrichtungen und Schweißprozessen ist es nötig, die freie Drahtelektrodenlänge ab einem Kontaktrohrende eines Kontaktrohrs eines Schweißbrenners mit hoher Genauigkeit zu kennen bzw. bereitzustellen. Ist beispielsweise der Schweißbrenner robotergeführt, ist teilweise die Position des Roboters und somit des Kontaktrohrendes mit hoher Genauigkeit bekannt. Eine Ungenauigkeit bzw. eine Unwissenheit über den Abstand zwischen dem Drahtelektrodenende und einem Werkstück ist daher im Wesentlichen durch die weniger genau bekannte freie Drahtelektrodenlänge ab dem Kontaktrohrende gegeben. Der Abstand zwischen Drahtelektrodenende und Werkstück wiederum ist wichtig für die Steuerung der Schweißprozesse, zum Beispiel bei der Zündung eines Lichtbogens. Auch für den eigentlichen Schweißprozess vor- oder nachgelagerte Prozesse kann es wichtig sein, solche Abstände genau zu kennen. Selbst wenn ein Drahtvorschub, das heißt eine Förderung der Drahtelektrode, kontinuierlich durch eine Überwachungseinrichtung überwacht wird, können sich Fehler bei der Überwachung aufsummieren und somit die freie Drahtelektrodenlänge immer ungenauer eingestellt werden. Darüber hinaus kann es vorkommen, dass ein Benutzer der Schweißvorrichtung ein Drahtelektrodenende manuell abgeschnitten und somit die freie Drahtelektrodenlänge verändert, ohne dass dies der Überwachungseinrichtung bekannt wird.

Üblicherweise wird die freie Drahtelektrodenlänge daher mithilfe eines Lineals oder einer Lehre gemessen, was viel Zeit erfordert und mitunter nicht möglich ist, da zum Beispiel Roboterschweißzellen teilweise schwer erreichbar sein können. Häufig hat man beispielsweise keinen Zugang zu Roboterschweißzellen, oder es ist ein Automatikbetrieb oder ein Sicherheitssystem vorgesehen. Darüber hinaus muss für diese Aufgabe stets Personal verfügbar sein.

### Zusammenfassung der Erfindung

Es ist daher eine Aufgabe der vorliegenden Erfindung, eine Schweißvorrichtung bereitzustellen, mittels welcher die freie Drahtelektrodenlänge besonders genau einstellbar ist. Eine weitere Aufgabe ist es, ein Roboter-Schweißsystem bereitzustellen, welches eine solche Schweißvorrichtung umfasst. Eine weitere Aufgabe ist es, ein Verfahren zum Fördern einer Drahtelektrode in einer Position mit einer genau definierten freien Drahtelektroden ab einem Kontaktrohr eines Schweißbrenners einer Schweißvorrichtung bereitzustellen. Eine weitere Aufgabe ist es, dass das Einstellen einer freien Drahtelektrodenlänge beim Handschweißen oder automatisch durch ein Schweißsystem, z.B. ein Roboterschweißsystem, einstellbar ist.

Diese Aufgaben werden durch die Gegenstände der unabhängigen Patentansprüche gelöst.

Dementsprechend wird eine Schweißvorrichtung bereitgestellt, mit:
einer Fördereinrichtung zum Fördern einer (abschmelzenden) Drahtelektrode der Schweißvorrichtung;
einer Drahtelektrode-Kontakteinrichtung zum elektrischen Kontaktieren der Drahtelektrode;
einer Referenzelektrode, welche elektrisch mit einem Referenz-Potenzial verbunden oder verbindbar ist;
einer elektrische-Parameter-Messeinrichtung, insbesondere eine Spannungsmesseinrichtung, welche zum Messen eines elektrischen Parameters, insbesondere einer Spannung, zwischen der Drahtelektrode-Kontakteinrichtung und der Referenzelektrode eingerichtet ist; und
einer Steuereinrichtung, welche zum Durchführen mindestens eines Positionierverfahrens eingerichtet ist, wobei in dem mindestens einen Positionierverfahren die Drahtelektrode durch die Fördereinrichtung in eine Position mit einer definierten freien Drahtelektrodenlänge ("Stickout") ab dem Kontaktrohrende eines Kontaktrohrs eines Schweißbrenners der Schweißvorrichtung gefördert wird, indem die Fördereinrichtung dazu eingerichtet ist, zum Durchführen des mindestens einen Positionierverfahrens:
   - eine aktuelle Position eines Drahtelektrodenendes der Drahtelektrode basierend auf mindestens einer Messung zu ermitteln, in welcher eine Änderung des durch die elektrische-Parameter-Messeinrichtung gemessenen elektrischen Parameters erfasst wird, während die Drahtelektrode durch die Fördereinrichtung gefördert wird; und
   - die Fördereinrichtung zu steuern, die Drahtelektrode basierend auf der ermittelten aktuellen Position zu fördern, bis zwischen dem Drahtelektrodenende und dem Kontaktrohrende die definierte freie Drahtelektrodenlänge vorliegt.

Demnach ist es eine der grundlegenden Ideen der vorliegenden Erfindung, dass eine elektrische-Parameter-Messung, insbesondere Spannungsmessung (genauer: eine Erfassung einer Spannungsänderung) oder Strommessung verwendet wird, um eine aktuelle Position des Drahtelektrodenendes zu bestimmen. Hierzu ist die Drahtelektrode-Kontakteinrichtung vorgesehen, welche die Drahtelektrode elektrisch kontaktiert. Somit kann ein elektrischer Parameter, z. B. eine elektrische Spannung, zwischen der Drahtelektrode und einer Referenzelektrode gemessen werden. Wenn die elektrisch zwingend leitende abschmelzende Drahtelektrode an definierten Punkten innerhalb der Schweißvorrichtung elektrisch kontaktiert wird und so mit einem anderen elektrischen Potenzial in Berührung kommt, kann unter Kenntnis dieser Positionen somit eine Position der Drahtelektrode bestimmt werden.

Bei der Drahtelektrode handelt es sich insbesondere um eine abschmelzende Drahtelektrode.

Besonders vorteilhaft ist es, wenn die Drahtelektrode in einer elektrisch isolierenden Seele verläuft und somit erst dann mit dem Kontaktrohr in elektrische Verbindung tritt, wenn die Drahtelektrode in das Kontaktrohr eintritt. Da das Kontaktrohr ohnehin auf einem definierten elektrischen Potenzial ("Schweißplus") gehalten wird, damit gegenüber dem Potenzial des zu schweißenden Werkstücks (Masse oder "Schweißminus") der Schweißstrom fließt, bietet es sich somit an, dass die elektrische-Parameter-Messeinrichtung Spannungsänderungen oder Stromänderungen detektiert, welche dadurch herrühren, dass die Drahtelektrode mit dem Kontaktrohr in elektrische Verbindung tritt. Die Referenzelektrode, welche auf einem definierten Referenzpotenzial liegt, kann bevorzugt auf Masse liegen oder sie kann mit dem Kontaktrohr des Schweißbrenners verbunden oder verbindbar sein. Auf diese Weise können bereits in der Schweißvorrichtung bestehende und ausgebildete Schweißpotenziale vorteilhaft verwendet werden. Denkbar ist jedoch auch, dass die Referenzelektrode auf einem weiteren elektrischen Potenzial liegt, welches sich von dem Schweißplus und dem Schweißminus unterscheidet.

Unter einem Positionierverfahren soll insbesondere ein Verfahren zu verstehen sein, mittels welchem die Drahtelektrode bezüglich des Schweißbrenners in eine definierte Position gebracht werden kann, insbesondere in eine Position mit einer definierten freien Drahtelektrodenlänge vor dem Kontaktrohrende ("Stickout"). Das Positionierverfahren unterscheidet sich insbesondere von einem Schweißverfahren oder Schweißprozess, da während des Positionierverfahrens kein Schweißstrom fließt und/oder kein Werkstück bearbeitet oder kontaktiert wird. Das Positionierverfahren kann ab Beginn eines Einfädelns der Drahtelektrode in die Schweißvorrichtung durchgeführt werden, beispielsweise automatisch mit Einfädeln einer neuen Drahtelektrode (auch als Schweißdraht bezeichnet).

Das Positionierverfahren entfaltet aber insbesondere seine Vorteile dann, wenn es zwischen Schweißprozessen durchgeführt wird, damit die freie Drahtelektrodenlänge und damit häufig auch der Abstand zwischen dem Drahtelektrodenende und dem Werkstück wieder besonders präzise bekannt wird. Wie auch im Folgenden noch erläutert werden wird, liegt eine besondere Stärke der erfinderischen Idee darin, dass Totzeit zwischen zwei Schweißprozessen genutzt werden kann, um die gewünschte freie Drahtelektrodenlänge wieder einzustellen oder, anders ausgedrückt, nachzujustieren. Eine solche Totzeit kann beispielsweise entstehen, wenn sich ein Roboterarm eines Roboter-Schweißsystems zwischen einem Endpunkt eines ersten Schweißprozesses und einem Startpunkt eines zweiten Schweißprozesses bewegt. Somit kann auch diese Totzeit ausgenutzt werden.

Für Handschweißen kann es vorteilhaft sein, wenn eine freie Drahtelektrodenlänge vor Beginn des Schweißens automatisch derart eingestellt wird, dass sie dem Schweißer vorgibt, wie hoch der ideale Abstand zwischen Kontaktrohr und Werkstück sein sollte. Dies kann basierend auf Einstellungen des Schweißgeräts über Art des Schweißprozesses, Art des Werkstücks und dergleichen automatisch eingestellt werden.

Allgemein kann vorgesehen sein, dass eine Elektrische-Parameter-Messeinrichtung zum Messen eines elektrischen Parameters (z.B. Spannung oder Strom und davon abgeleitete elektrische Größen) zwischen der Drahtelektrode-Kontakteinrichtung und der Referenzelektrode eingerichtet ist, und dass die aktuelle Position des Drahtelektrodenendes der Drahtelektrode basierend auf mindestens einer Messung ermittelt wird, in welcher eine Elektrische-Parameter-Änderung (z.B. Spannungsänderung oder Stromänderung) des durch die Elektrische-Parameter-Messeinrichtung gemessenen elektrischen Parameters erfasst wird, während die Drahtelektrode durch die Fördereinrichtung gefördert wird. Beispielsweise könnte der gemessene elektrische Strom zunächst auf 0 mA liegen und bei elektrischem Kontakt zwischen Drahtelektrode und Kontaktrohr auf einen Wert im Bereich von 1 mA bis 500 mA ansteigen. Die Elektrische-Parameter-Änderung wäre somit ein Stromanstieg.

Im Folgenden wird beispielhaft vor allem eine Variante zur Erläuterung der Erfindung herangezogen werden, in welcher die elektrische-Parameter-Messeinrichtung eine Spannungsmesseinrichtung ist oder aufweist, mittels welcher eine Spannungsänderung zwischen Drahtelektrode (genauer: Drahtelektrode-Kontakteinrichtung) und Referenzelektrode messbar ist bzw. gemessen wird. Es versteht sich jedoch, dass alternativ (oder auch zusätzlich) die elektrische-Parameter-Messeinrichtung auch - wie beschrieben - eine Strommesseinrichtung sein oder aufweisen kann.

Gemäß einigen bevorzugten Ausführungsformen, Varianten oder Weiterbildungen von Ausführungsformen ist die Referenzelektrode elektrisch mit Masse verbunden oder verbindbar. Die elektrische-Parameter-Messeinrichtung ist oder umfasst eine Spannungsmesseinrichtung, welche zumindest zum Messen einer Spannung zwischen der Drahtelektrode und Masse eingerichtet ist. Die Referenzelektrode kann insbesondere auch mit dem Werkstück elektrisch verbunden sein. Eine solche Anordnung ist besonders einfach, da sie kaum zusätzliche Elemente gegenüber einer herkömmlichen Schweißvorrichtung erfordert.

Gemäß einigen bevorzugten Ausführungsformen, Varianten oder Weiterbildungen von Ausführungsformen ist die Referenzelektrode elektrisch mit einem Kontaktrohr eines Schweißbrenners der Schweißvorrichtung verbunden oder verbindbar. Die elektrische-Parameter-Messeinrichtung ist oder umfasst eine Spannungsmesseinrichtung, welche zumindest zum Messen einer Spannung zwischen der Drahtelektrode und dem Kontaktrohr eingerichtet ist. Wie bereits erläutert, tritt die Drahtelektrode üblicherweise mit Eintritt in das Kontaktrohr mit diesem Kontaktrohr elektrisch in Kontakt (Kurzschluss).

Erfindungsgemäß kann somit eine Änderung des elektrischen Parameters, insbesondere eine Spannungsänderung oder Stromänderung, zu diesem Zeitpunkt erfasst werden und damit darauf geschlossen werden, dass sich das Drahtelektrodenende eben am Eingang des Kontaktrohrs befindet. Unter Verwendung einer bekannten Drahtelektrodenvorschubgeschwindigkeit (oder kurz: Drahtvorschubgeschwindigkeit) durch die Fördereinrichtung und einem bekannten Abstand zwischen Kontaktrohranfang und Kontaktrohrende (Kontaktrohrlänge) kann somit das Drahtelektrodenende von der bekannten Position zu Beginn des Kontaktrohrs an die gewünschte Endposition mit der gewünschten definierten freien Drahtelektrodenlänge vor dem Kontaktrohrende gefördert werden.

Die Länge des Kontaktrohrs kann vorbekannt und beispielsweise in der Steuereinrichtung gespeichert oder speicherbar sein. Denkbar ist auch, dass mit dem Kontaktrohr oder dem Schweißbrenner ein Speichermedium oder Identifikationscode verbunden ist, mittels welchem die Steuereinrichtung automatisch eine Länge des Kontaktrohrs (Kontaktrohrlänge) ermitteln kann. In einigen Varianten kann bei Unkenntnis der Kontaktrohrlänge ein Benutzer der Schweißvorrichtung auch, beispielsweise mittels eines Displays oder einer Sprachsteuerung, aufgefordert werden, die Länge des Kontaktrohrs einzugeben. Der Benutzer kann daraufhin die Kontaktrohrlänge messen, einer Stückliste entnehmen oder auf andere Weise ermitteln und mittels seiner Eingabevorrichtung der Steuereinrichtung bekanntgeben. Bei der Eingabevorrichtung kann es sich zum Beispiel um einen Touchscreen der Schweißvorrichtung handeln. Ist die Schweißvorrichtung mit einem Sprachsteuerungssystem ausgestattet, kann der Benutzer der Steuereinrichtung die Kontaktrohrlänge auch in natürlicher Sprache nennen bzw. die gesamte Interaktion zwischen der Steuereinheit und dem Benutzer kann über Eingabe und Ausgabe von natürlicher Sprache durchgeführt werden.

Gemäß einigen bevorzugten Ausführungsformen, Varianten oder Weiterbildungen von Ausführungsformen weist die Drahtelektrode-Kontakteinrichtung einen Schleifkontakt- und/oder eine Antriebsrolle für die Drahtelektrode auf. Auf diese Weise kann die Drahtelektrode auf einfache und kontrollierbare Weise elektrisch kontaktiert werden. Insbesondere Antriebsrollen sind typische Komponenten beispielsweise innerhalb der Fördereinrichtung, bei denen ohnehin ein guter mechanischer Kontakt zur Drahtelektrode notwendig ist und können daher problemlos zum elektrischen Kontaktieren der Drahtelektrode eingerichtet werden. Denkbar ist jedoch auch, dass die Drahtelektrode-Kontakteinrichtung die Drahtelektrode über eine an die Drahtelektrode angepresste Führungsrolle, einen Schleifkontakt, oder mindestens ein Kugellager mit leitfähiger Befettung elektrisch kontaktiert. Da es ausreichend ist, das elektrische Potenzial abzugreifen, braucht die elektrische Ankopplung an die Drahtelektrode nicht unbedingt niederohmig zu sein. Beispielsweise kann die elektrische Ankopplung an die Drahtelektrode einen elektrischen Widerstand bis 100 Kiloohm aufweisen, zum Beispiel einen elektrischen Widerstand von zwischen 0,5 Kiloohm und 100 Kiloohm, oder zwischen 10 Kiloohm und 50 Kiloohm.

Gemäß einigen bevorzugten Ausführungsformen, Varianten oder Weiterbildungen von Ausführungsformen weist die Steuereinrichtung ein Laufzeit-Bereitstellungsmodul auf, welches dazu eingerichtet ist, einen Signalverzögerungswert ("Laufzeitfehler") für Komponenten der Steuereinrichtung bereitzustellen. Die Steuereinrichtung kann dazu eingerichtet sein, bei dem Ermitteln der aktuellen Position des Drahtelektrodenendes den bereitgestellten Signalverzögerungswert zu berücksichtigen, insbesondere zu kompensieren. Das Laufzeit-Bereitstellungsmodul kann den Signalverzögerungswert als eine abgespeicherte Größe umfassen oder dazu ausgelegt und eingerichtet sein, einen aktuellen Signalverzögerungswert zu bestimmen. Das Bestimmen des Signalverzögerungswertes kann auf Anforderung eines Benutzers, regelmäßig oder automatisch nach einem vordefinierten Auslöser erfolgen. Der Auslöser kann beispielsweise das Ergebnis einer Plausibilitätsbetrachtung sein, wenn sich herausstellt, dass das Durchführen des erfindungsgemäßen Positionierverfahrens mit dem aktuell bekannten Signalverzögerungswert nicht die gewünschte Genauigkeit der freien Drahtelektrodenlänge ergibt.

Ebenso denkbar ist es, dass die Steuereinrichtung die aktuelle Position des Drahtelektrodenendes ohne Verwendung des Signalverzögerungswertes berechnet, aber die Steuersignale zur Steuerung der Fördereinrichtung zum Einstellen der definierten freien Drahtelektrodenlänge unter Berücksichtigung des Signalverzögerungswerts von dem Laufzeit-Bereitstellungsmodul anpasst. Insbesondere wird die Steuereinrichtung hierzu die noch zu fördernde Drahtelektrodenlänge um einen Wert verringern, welcher gleich dem Signalverzögerungswert, multipliziert mit einer Fördergeschwindigkeit der Drahtelektrode ist.

Gemäß einigen bevorzugten Ausführungsformen, Varianten oder Weiterbildungen von Ausführungsformen ist die Steuereinrichtung dazu eingerichtet, das Ermitteln der aktuellen Position des Drahtelektrodenendes basierend auf mehreren Messungen von Änderungen elektrischer Parameter (z.B. Spannungsänderungen) durchzuführen. Zwei oder mehr dieser mehreren Messungen können insbesondere bei verschiedenen Positionen des Drahtelektrodenendes durchgeführt werden, sodass jede von diesen Messungen eine weitere Information über eine aktuelle Position der Drahtelektrode bereitstellt.

Alternativ oder zusätzlich können zwei oder mehr Messungen von Änderungen des elektrischen Parameters (oder mehrerer elektrischer Parameter) auch bei verschiedenen Drahtelektroden-Vorschubgeschwindigkeitsrichtungen erfolgen, das heißt mindestens eine Messung bei einer Vorwärtsförderung der Drahtelektrode hin zum Kontaktrohrende und mindestens eine Messung bei einer Rückwärtsförderung der Drahtelektrode in Richtung der Fördereinrichtung. Solche Messungen bei verschiedenen Drahtelektroden-Vorschubgeschwindigkeitsrichtungen können jeweils an derselben und/oder an verschiedenen Positionen der Drahtelektrode (bzw. an denselben und/oder verschiedenen Kontaktpunkten des Schweißbrenners, insbesondere Kontaktrohrs) erfolgen. Da die Vorschubgeschwindigkeit sowie Beginn und Ende des Drahtelektrodenvorschubs und weitere Parameter der Fördereinrichtung bevorzugt genau bekannt sind, können auf diese Weise zusätzliche Informationen über die aktuelle Position und/oder das Verhalten des Drahtelektrodenendes gesammelt werden, welche das Positionierverfahren noch genauer machen können.

Gemäß einigen bevorzugten Ausführungsformen, Varianten oder Weiterbildungen von Ausführungsformen umfasst das mindestens eine Positionierverfahren ein Präzisions-Positionierverfahren. Das Positionierverfahren kann aus dem Präzisions-Positionierverfahren bestehen oder neben dem Präzisions-Positionierverfahren weitere Optionen aufweisen, beispielsweise ein Einfach-Positionierverfahren. Das Einfach-Positionierverfahren kann sich von dem Präzisions-Positionierverfahren insbesondere dadurch unterscheiden, dass das Einfach-Positionierverfahren geringeren Aufwand erfordert (beispielsweise schneller durchführbar ist), aber im Vergleich zu dem Präzisions-Positionierverfahren eine geringere Genauigkeit der Positionierung des Drahtelektrodenendes aufweist.

Die Steuereinrichtung kann dazu eingerichtet sein, in einem Präzisions-Positionierverfahren:
- mittels der elektrische-Parameter-Messeinrichtung eine erste Änderung eines elektrischen Parameters (z.B. erste Spannungsänderung) zu erfassen, während die Drahtelektrode mit einer ersten Geschwindigkeit durch die Fördereinrichtung vorwärts zu dem Kontaktrohr hin gefördert wird;
- danach die Fördereinrichtung zu steuern, die Drahtelektrode mit einer zweiten Geschwindigkeit rückwärts zu fördern, zumindest bis mittels der elektrische-Parameter-Messeinrichtung eine zweite Änderung des elektrischen Parameters (z.B. zweite Spannungsänderung) erfasst wird;
- danach die Fördereinrichtung zu steuern, die Drahtelektrode mit einer dritten Geschwindigkeit vorwärts zu fördern, bis mittels der elektrische-Parameter-Messeinrichtung eine dritte Änderung des elektrischen Parameters (z.B. dritte Spannungsänderung) erfasst wird; und
- die aktuelle Position der Drahtelektrode zumindest basierend auf einer Messung, in der die dritte Änderung erfasst wurde, zu ermitteln. Vorzugsweise ist die dritte Geschwindigkeit geringer als die erste Geschwindigkeit. Durch das Fördern mit geringerer Geschwindigkeit kann das Fördern und somit auch das Positionieren der Drahtelektrode mit höherer Genauigkeit erfolgen. Die Messungen der ersten und/oder der zweiten Änderung des elektrischen Parameters haben vorrangig den Zweck, dass das Drahtelektrodenende mit der (langsameren) dritten Geschwindigkeit nur noch möglichst wenig weit gefördert werden muss, um die definierte (das heißt gewünschte) freie Drahtelektrodenlänge zu erreichen. Es versteht sich nämlich, dass die genaueste Einstellung der freien Drahtelektrodenlänge dadurch erfolgen würde, dass die Drahtelektrode stets mit einer besonders geringen Geschwindigkeit gefördert wird, sodass eine Positionsungenauigkeit des Drahtelektrodenendes aufgrund von Nachlauf, Abrutschen und Signalverzögerung möglichst gering gehalten wird. Im Gegensatz dazu ist jedoch bevorzugt, dass das Positionierverfahren möglichst schnell durchgeführt werden kann, damit es möglichst in bestehenden Totzeiten durchgeführt werden kann oder, falls nötig, nur sehr kurze zusätzliche Totzeiten erfordert. Beispielsweise in der Automobilindustrie wird angestrebt, die Totzeit möglichst bei Null zu halten.

Besonders bevorzugt ist die Steuereinrichtung dazu eingerichtet, nach dem Ermitteln der aktuellen Position der Drahtelektrode die Drahtelektrode mit einer vierten Geschwindigkeit weiter vorwärts zu fördern, bis zwischen dem Drahtelektrodenende und dem Kontaktrohrende die definierte freie Drahtelektrodenlänge vorliegt. Besonders bevorzugt ist es, wenn das Fördern der Drahtelektrode mit der dritten Geschwindigkeit stetig und monoton steigend in das Fördern mit der vierten Geschwindigkeit übergeht. Die vierte Geschwindigkeit ist bevorzugt größer als die dritte Geschwindigkeit. Wenn nämlich mit der Messung der dritten Änderung des elektrischen Parameters die aktuelle Position der Drahtelektrode (genau: das Drahtelektrodenende) genau bekannt ist, kann die Förderung der Drahtelektrode selbst bis zu der Position mit der definierten freien Drahtelektrodenlänge mit der (erhöhten) vierten Geschwindigkeit erfolgen, damit die Endposition der Drahtelektrode schneller erreicht ist und das Schweißen beispielsweise schneller fortgesetzt werden kann.

Die Erfindung stellt außerdem ein Roboter-Schweißsystem bereit, welches eine erfindungsgemäße Schweißvorrichtung umfasst. Das Roboter-Schweißsystem umfasst außerdem eine Robotereinrichtung (beispielsweise einen Roboterarm), welche zum Führen des Schweißbrenners der Schweißvorrichtung eingerichtet ist, sowie eine System-Steuereinrichtung, welche dazu eingerichtet ist, sowohl Steuersignale zum Steuern der Robotereinrichtung zu erzeugen und zu übermitteln als auch Steuersignale zum Steuern der Schweißvorrichtung zu erzeugen und zu übermitteln. Die Steuereinrichtung der Schweißvorrichtung ist vorteilhaft dazu eingerichtet, unter den Steuersignalen ein Positionierverfahren-Auslösesignal von der System-Steuereinrichtung zu erhalten und als Reaktion darauf eines des mindestens einen Positionierverfahrens durchzuführen. Die System-Steuereinrichtung kann in die Schweißvorrichtung integriert sein, in die Robotereinrichtung integriert sein oder von sowohl Schweißvorrichtung als auch Robotereinrichtung getrennt ausgebildet und angeordnet sein. Beispielsweise kann die System-Steuereinrichtung auch durch einen entfernt angeordneten Server oder durch eine Cloud-Rechenplattform implementiert werden.

Ein besonderer Vorteil der System-Steuereinrichtung liegt darin, dass dieser die Informationen vorliegen, wann das Schweißen jeweils beginnt und wann eine Totzeit vorliegt, etwa weil die Robotereinrichtung erst bewegt oder neu ausgerichtet werden muss. Beispielsweise kann der System-Steuereinrichtung ein Schweiß-Ablaufplan vorliegen, anhand dessen die System-Steuereinrichtung automatisch bestimmen kann, wieviel Totzeit zwischen dem Ende des vorhergegangenen Schweißvorgangs und dem Beginn des nächsten Schweißvorgangs gemäß Schweiß-Ablaufplan zwangsläufig liegt.

Die System-Steuereinrichtung kann außerdem über eine Datenbank mit Informationen über die Zeitdauern oder die maximalen Zeitdauern jedes Positionierverfahrens des mindestens einen Positionierverfahrens enthalten. Basierend auf der bekannten Totzeit kann die System-Steuereinrichtung somit vorteilhaft die Steuereinrichtung der Schweißvorrichtung steuern, das präziseste innerhalb der bevorstehenden Totzeit durchführbare Positionierverfahren durchzuführen. Auf diese Weise kann mindestens eine Totzeit in einem Schweiß-Ablaufplan mit mehreren Schweißvorgängen (oder: Schweißaufgaben), besonders bevorzugt mehrere Totzeiten und ganz besonders bevorzugt sämtliche Totzeiten, in dem Schweiß-Ablaufplan genutzt werden, um sicherzustellen, dass möglichst häufig oder sogar immer vor Beginn eines Schweißprozesses eine bekannte, insbesondere definierte, freie Drahtelektrodenlänge vorliegt.

Gemäß einigen bevorzugten Ausführungsformen, Varianten oder Weiterbildungen von Ausführungsformen wird das mindestens eine Positionierverfahren durchgeführt, während sich die Robotereinrichtung im Transit zwischen zwei Positionen befindet, an denen die Schweißvorrichtung zum Schweißen gesteuert wird, wobei während des Transits kein Schweißen stattfindet. Mit anderen Worten kann das Positionierverfahren, wie bereits besprochen wurde, vorzugsweise während einer Totzeit der Schweißvorrichtung durchgeführt werden, das heißt während einer Zeit, während der kein Schweißen möglich ist oder kein Schweißverfahren durchgeführt wird, beispielsweise weil sich der Schweißbrenner nicht in der richtigen Entfernung und/oder Ausrichtung zu einem Werkstück des nächsten Schweißprozesses befindet.

Des Weiteren stellt die Erfindung ein Verfahren zum Fördern einer Drahtelektrode in einer Position mit einer definierten freien Drahtelektrodenlänge ab einem Kontaktrohr eines Schweißbrenners einer Schweißvorrichtung bereit. Das Verfahren umfasst zumindest die Schritte:
- Definieren einer gewünschten freie Drahtelektrodenlänge der Drahtelektrode;
- Messen eines elektrischen Parameters, z. B. einer Spannung, zwischen der Drahtelektrode und einer Referenzelektrode;
- Fördern der Drahtelektrode in Richtung eines Kontaktrohrs;
- Ermitteln einer aktuellen Position der Drahtelektrode, insbesondere eines Drahtelektrodenendes der Drahtelektrode, basierend auf einer gemessenen Änderung des gemessenen elektrischen Parameters, während die Drahtelektrode gefördert wird; und
- Fördern der Drahtelektrode basierend auf der ermittelten aktuellen Position, bis zwischen dem Drahtelektrodenende und dem Kontaktrohrende die definierte freie Drahtelektrodenlänge vorliegt.

Das Definieren der gewünschten freien Drahtelektrodenlänge der Drahtelektrode kann basierend auf einem in einer Steuereinrichtung der Schweißvorrichtung gespeicherten Sollwert für die freie Drahtelektrodenlänge basieren. Alternativ kann die gewünschte freie Drahtelektrodenlänge auch jeweils in Abhängigkeit von einem durchzuführenden Schweißprozess definiert werden, etwa durch die Eingabe eines Benutzers über eine Eingabeeinrichtung und/oder durch Steuersignale einer System-Steuereinrichtung, wie im Voranstehenden beschrieben wurde. Denkbar ist auch, dass die freie Drahtelektrodenlänge durch die Steuereinrichtung basierend auf Parametern eines durchzuführenden Schweißprozesses automatisch definiert wird, zum Beispiel unter Verwendung einer Datenbank.

Gemäß einigen bevorzugten Ausführungsformen, Varianten oder Weiterbildungen von Ausführungsformen wird bei dem Ermitteln der aktuellen Position des Drahtelektrodenendes ein Signalverzögerungswert berücksichtigt. Auf diese Weise kann das Ermitteln der aktuellen Position noch präziser erfolgen.

Gemäß einigen bevorzugten Ausführungsformen, Varianten oder Weiterbildungen von Ausführungsformen wird das Ermitteln der aktuellen Position des Drahtelektrodenendes basierend auf mehreren Messungen von Änderungen eines elektrischen Parameters (z. B. Spannungsänderungen) durchgeführt, wie im Vorangehenden beschrieben wurde. Beim Erfassen oder Ermitteln der Position der Drahtelektrode an verschiedenen Kontaktpunkten kann auch durch die Recheneinrichtung eine Mittelung durchgeführt werden, um die Genauigkeit des Ermittelns der Position zu erhöhen.

Gemäß einigen bevorzugten Ausführungsformen, Varianten oder Weiterbildungen von Ausführungsformen ist die Referenzelektrode elektrisch mit Masse verbunden oder verbindbar. Das Messen des elektrischen Parameters, z. B. der Spannung, kann somit insbesondere zwischen der Drahtelektrode und Masse durchgeführt werden.

Gemäß einigen bevorzugten Ausführungsformen, Varianten oder Weiterbildungen von Ausführungsformen ist die Referenzelektrode elektrisch mit einem Kontaktrohr des Schweißbrenners der Schweißvorrichtung verbunden oder verbindbar. Das Messen des elektrischen Parameters, z. B. der Spannung, kann insbesondere zwischen der Drahtelektrode und dem Kontaktrohr durchgeführt werden, genauer gesagt, zwischen einem elektrischen Potenzial der Drahtelektrode und einem elektrischen Potenzial des Kontaktrohrs.

Gemäß einigen bevorzugten Ausführungsformen, Varianten oder Weiterbildungen von Ausführungsformen umfasst das erfindungsgemäße Verfahren weiterhin die Schritte:
- Erfassen einer ersten Änderung des elektrischen Parameters (z. B. erste Spannungsänderung) während die Drahtelektrode mit einer ersten Geschwindigkeit vorwärts zu dem Kontaktrohr hin gefördert wird;
- Fördern der Drahtelektrode mit einer zweiten Geschwindigkeit rückwärts zumindest bis eine zweite Änderung des elektrischen Parameters (z. B. zweite Spannungsänderung) erfasst wird;
- Fördern der Drahtelektrode mit einer dritten Geschwindigkeit vorwärts zumindest bis eine dritte Änderung des elektrischen Parameters (z. B. dritte Spannungsänderung) erfasst wird; und
- Ermitteln der aktuellen Position des Drahtelektrodenendes zumindest basierend auf einer Messung, mit welcher die dritte Änderung erfasst wurde.

Die dritte Geschwindigkeit ist vorzugsweise geringer als die erste Geschwindigkeit. Ein Verfahren mit den genannten zusätzlichen Verfahrensschritten ist auch als Präzisions-Positionierverfahren bezeichenbar und kann eines von mehreren Positionierverfahren sein, welches als das erfindungsgemäße Verfahren oder als Teil des erfindungsgemäßen Verfahrens durchgeführt wird. Die erste Änderung des elektrischen Parameters, die zweite Änderung des elektrischen Parameters und die dritte Änderung des elektrischen Parameters werden insbesondere in dieser Reihenfolge erfasst.

In einigen bevorzugten Ausführungsformen, Varianten oder Weiterbildungen von Ausführungsformen wird nach dem Ermitteln der aktuellen Position des Drahtelektrodenendes die Drahtelektrode mit einer vierten Geschwindigkeit vorwärts gefördert, bis zwischen dem Drahtelektrodenende und dem Kontaktrohrende die definierte freie Drahtelektrodenlänge vorliegt. Die vierte Geschwindigkeit ist bevorzugt größer als die dritte Geschwindigkeit. Besonders bevorzugt geht die dritte Geschwindigkeit stetig und monoton steigend in die vierte Geschwindigkeit über.

Weitere bevorzugte Ausführungsformen, Varianten und Weiterbildungen von Ausführungsformen ergeben sich aus den Unteransprüche sowie aus der Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:
- Fig. 1: eine schematische Darstellung zum Erläutern einer Schweißvorrichtung gemäß einer Ausführungsform der vorliegenden Erfindung;
- Fig. 2 a) bis d): Position und Bewegungszustände einer Drahtelektrode zu verschiedenen Zeitpunkten beim Durchführen eines Einfach-Positionierverfahrens;
- Fig. 3a): ein Ablaufdiagramm einer Position der Drahtelektrode bei dem Einfach-Positionierverfahren;
- Fig. 3b): ein Ablaufdiagramm einer Geschwindigkeit der Drahtelektrode bei dem Einfach-Positionierverfahren;
- Fig. 3c): ein Ablaufdiagramm einer Spannungsdifferenz zwischen der Drahtelektrode und einer Referenzelektrode bei dem Einfach-Positionierverfahren;
- Fig. 4a) bis g): Position und Bewegungszustände einer Drahtelektrode zu verschiedenen Zeitpunkten beim Durchführen eines Präzisions-Positionierverfahrens;
- Fig. 5a): ein Ablaufdiagramm einer Position der Drahtelektrode bei dem Präzisions-Positionierverfahren;
- Fig. 5b): ein Ablaufdiagramm einer Geschwindigkeit der Drahtelektrode bei dem Präzisions-Positionierverfahren;
- Fig. 5c): ein Ablaufdiagramm einer Spannungsdifferenz zwischen der Drahtelektrode und einer Referenzelektrode bei dem Präzisions-Positionierverfahren;
- Fig. 6: eine schematische Darstellung zum Erläutern einer Schweißvorrichtung gemäß einer weiteren Ausführungsform der vorliegenden Erfindung;
- Fig. 7: zeigt ein schematisches Blockschaltbild eines Roboter-Schweißsystems gemäß noch einer weiteren Ausführungsform der vorliegenden Erfindung; und
- Fig. 8: ein schematisches Flussdiagramm zum Erläutern eines Verfahrens gemäß noch einer Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

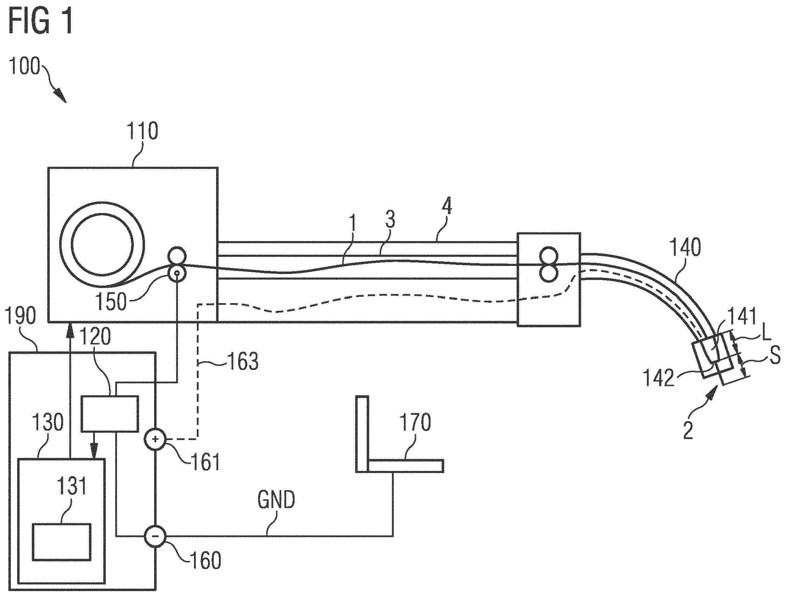

Fig. 1 zeigt eine schematische Darstellung zum Erläutern einer Schweißvorrichtung 100 gemäß einer Ausführungsform der vorliegenden Erfindung. Die Schweißvorrichtung 100 weist eine Fördereinrichtung 110 zum Fördern einer abschmelzenden Drahtelektrode 1 der Schweißvorrichtung 100 auf. Das Fördern der Drahtelektrode 1 kann beispielsweise mithilfe einer Antriebsrolle und einer oder mehreren Führungsrollen erfolgen.

Die Schweißvorrichtung 100 weist außerdem einen Schweißbrenner 140 auf, welcher in einem Kontaktrohr 141 endet. Das Kontaktrohr 141 weist zwischen seinem Anfang am Rohrbogen des Schweißbrenners 140 und dem Kontaktohrende 142 eine Kontaktrohrlänge L auf. Zum Schweißen wird üblicherweise die Drahtelektrode 1 auf eine definierte freie Drahtelektrodenlänge S ab dem Kontaktrohrende 142 gefördert. Während eines Schweißprozesses ist es von großem Vorteil, jeweils möglichst genau die freie Drahtelektrodenlänge S zu kennen, insbesondere wenn der Abstand des Kontaktrohrendes 142 von einem zu schweißenden Werkstück 170 bekannt ist. Auf diese Weise ist nämlich auch der Abstand zwischen dem Drahtelektrodenende 2 und dem Werkstück 170 bekannt, Der bekannte Abstand kann auch für andere, dem eigentlichen Schweißen vor- oder nachgelagerte Anwendungen, etwa ein Abtasten eines Werkstücks mit dem Drahtelektrodenende 2 zur Sensierung, eine Markierung oder dergleichen, verwendet werden.

Fig. 1 zeigt außerdem, dass die Schweißvorrichtung 100 eine Schweißstromquelle 190 aufweist, welche dazu ausgelegt ist, elektrische Leistung, insbesondere Schweißleistung zum Schweißen, für die Schweißvorrichtung 100 bereitzustellen. Die Schweißstromquelle 190 und die Fördereinrichtung 110 können in verschiedenen Gehäusen angeordnet sein, wie in Fig. 1 schematisch dargestellt ist, können in ein und dasselbe Gehäuse integriert und/oder dergleichen mehr. Auch die Fördereinrichtung 110 kann vollständig in einem separaten Gehäuse angeordnet sein oder kann, etwa bei einer Push-Pull-Fördereinrichtung, teilweise nahe oder in der Schweißstromquelle 190 und teilweise nahe bei oder in dem Schweißbrenner 140 angeordnet sein, sodass die Drahtelektrode 1 teilweise vorwärts geschoben ("push") wird und teilweise gezogen ("pull") wird.

Die Schweißvorrichtung 100 weist außerdem eine Drahtelektrode-Kontakteinrichtung 150 auf, mittels welcher die Drahtelektrode 1 elektrisch kontaktierbar ist und kontaktiert wird. In Fig. 1 ist der Fall dargestellt, dass die Drahtelektrode-Kontakteinrichtung 150 die Drahtelektrode 1 mittels einer Antriebsrolle kontaktiert. Um die zuverlässige Förderung der Drahtelektrode 1 zu gewährleisten, ist üblicherweise ohnehin vorgesehen, dass eine solche Antriebsrolle stets in festem Kontakt mit der Drahtelektrode 1 steht. Aus diesem Grund bietet es sich an, diese Förderrolle daher auch zum elektrischen Kontaktieren der Drahtelektrode 1 zu verwenden. Alternativ könnte das Potenzial der Drahtelektrode 1 auch an einer Push-Pull-Einheit abgegriffen werden. Bei einigen Ausführungsformen kann vorgesehen sein, dass eine Rotorwelle eines Elektromotors auf dem elektrischen Potenzial der Drahtelektrode 1 liegt, etwa weil Triebrolle und Klemmadapter nicht elektrisch isolierend ausgebildet sind. In diesem Fall kann das Potenzial der Drahtelektrode 1 somit auch an der Rotorwelle abgegriffen werden.

Die Schweißvorrichtung 100 weist außerdem eine Referenzelektrode 160 auf, welche elektrisch mit einem Referenzpotenzial verbunden ist. Bei dem in Fig. 1 dargestellten Beispiel ist die Referenzelektrode 160 mit Masse GND verbunden oder, anders ausgedrückt, mit dem Schweißminus, welches auch mit dem Werkstück 170 verbunden ist. Die Schweißstromquelle 190 ist dazu ausgelegt und eingerichtet, eine elektrische Spannung, die Schweißspannung, zwischen dem Kontaktrohr 141 und dem Werkstück 170 auszubilden. Die Schweißstromquelle 190 weist hierzu eine positive Elektrode 161 auf, welche, wie in Fig. 1 wiederum schematisch gezeigt ist, über eine elektrische Leitung 163 elektrisch mit dem Kontaktrohr 141 verbunden ist.

Zwischen Fördereinrichtung 110 und/oder Schweißbrenner 140 verläuft die Drahtelektrode 1 normalerweise zumindest teilweise innerhalb einer Seele 3, welche vorliegend elektrisch isolierend ausgebildet ist. Alternativ kann die Seele auch elektrisch leitend ausgebildet sein, wobei dann jedoch eine elektrische Isolierung zwischen der Seele 3 und dem Kontaktrohr 141 sowie dem Schweißpotenzial vorgesehen sein muss. Die Seele 3 verläuft üblicherweise innerhalb eines Schlauchpakets 4. Auch die elektrischen Leitungen 163 können ganz oder teilweise innerhalb des Schlauchpakets 4 verlaufen, wie in Fig. 1 ebenfalls schematisch dargestellt ist.

Wenn, durch die Fördereinrichtung 110 vorgeschoben, die Drahtelektrode 1 schließlich vom Rohrbogen des Schweißbrenners 140 aus in das Kontaktrohr 141 eintritt, kontaktiert die Drahtelektrode 1 dort das Kontaktrohr in elektrisch leitender Weise und wird dadurch auf dasselbe Potenzial gebracht. Da der Ort (oder: Kontaktpunkt), an welchem dies geschieht, nämlich der Beginn des Kontaktrohrs 141, bekannt ist, kann erfindungsgemäß eine Information über eine Änderung eines elektrischen Parameters, z. B. eine Strom- oder Spannungsänderung, an der Drahtelektrode 1 dazu verwendet werden, festzustellen, dass sich das Drahtelektrodenende 2 aktuell an der genannten Position, d.h. an dem Kontaktpunkt des Kontaktrohrs 141, befindet.

Bei der in Fig. 1 gezeigten Ausführungsform ist als elektrische-Parameter-Messeinrichtung eine Spannungsmesseinrichtung 120 vorgesehen, welche zum Messen einer Spannung zwischen der Drahtelektrode-Kontakteinrichtung 150 (und damit der Drahtelektrode 1 selbst) einerseits und der Referenzelektrode 160 (hier auf Masse GND) andererseits eingerichtet ist. Die Spannungsmesseinrichtung 120 kann, wie in Fig. 1 dargestellt ist, Teil der Schweißstromquelle 190 sein, sie kann jedoch auch in einem anderen Gehäuse der Schweißvorrichtung 100 angeordnet sein, beispielsweise in der Fördereinrichtung 110 oder in noch einem anderen separaten Gehäuse.

Weiterhin weist die Schweißvorrichtung 100 eine Steuereinrichtung 130 auf, welche zum Durchführen mindestens eines Positionierverfahrens eingerichtet ist. Auch die Steuereinrichtung 130 kann in die Schweißstromquelle 190 integriert sein, in die Fördereinrichtung 110 integriert sein und/oder in ein anderes Gehäuse der Schweißvorrichtung 100 integriert sein.

Die Steuereinrichtung kann übliche Recheneinheiten aufweisen, beispielsweise einen Mikroprozessor, eine zentrale Prozessoreinheit, CPU, eine Graphikprozessoreinheit, GPU, eine anwendungsspezifische integrierte Schaltung, ASIC, ein feldprogrammierbares Logikgatter, FPGA, und/oder dergleichen mehr. Des Weiteren kann die Steuereinrichtung 130 einen nichtflüchtigen Datenspeicher aufweisen, beispielsweise eine Festplatte oder einen magnetischen Speicher wie etwa ein Festkörperlaufwerk (Solid State Drive, SSD). Die Steuereinrichtung 130 kann auch einen Arbeitsspeicher aufweisen (RAM, Random Access Memory). Die Steuereinrichtung 130 kann auch ganz oder teilweise durch eine Cloud-Rechenplattform und/oder einen fernverbundenen Server implementiert sein. Zu diesem Zwecke kann die Fördereinrichtung 110 und/oder die Schweißstromquelle 190 eine entsprechende Schnittstelle aufweisen, beispielsweise eine Ethernet-Schnittstelle, welche drahtgebunden oder drahtlos (WiFi) ausgebildet sein kann, eine Funkschnittstelle und/oder dergleichen mehr.

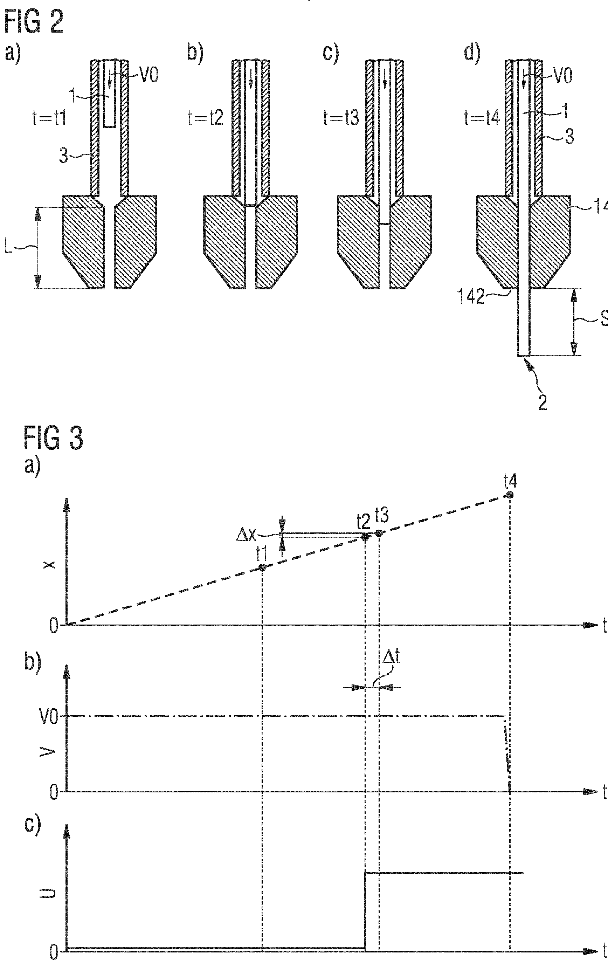

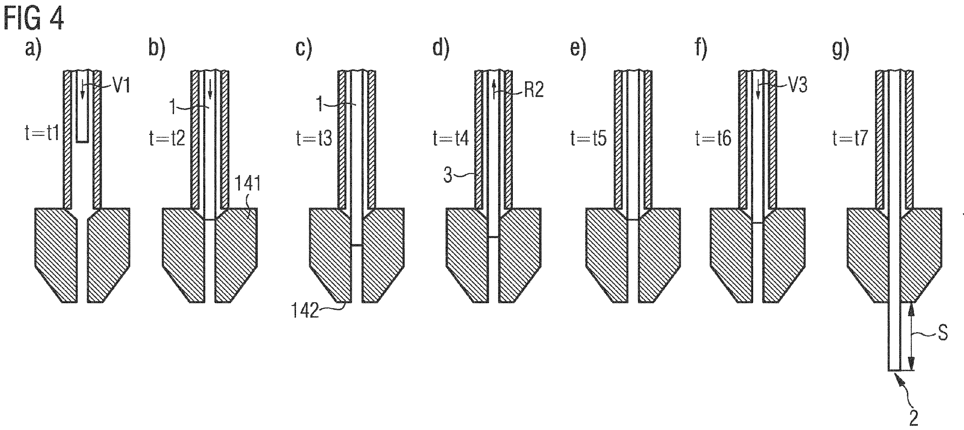

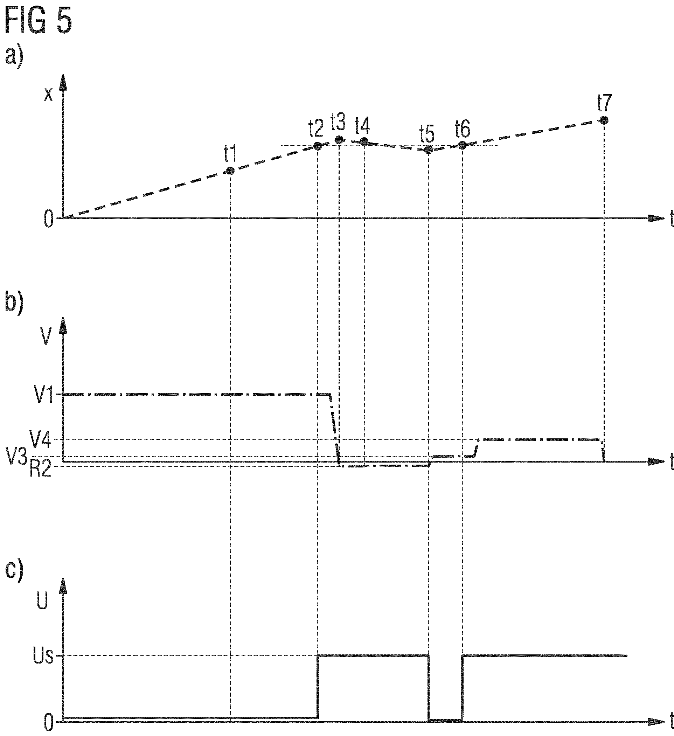

Im Folgenden werden zwei verschiedene Positionierverfahren beschrieben werden, gemäß welchen erfindungsgemäß die Drahtelektrode 1 in eine Position mit einer definierten freien Drahtelektrodenlänge S ab dem Kontaktrohrende 142 gefördert werden kann. Zunächst wird anhand von Fig. 2 und Fig. 3 ein einfaches Positionierverfahren ("Einfach-Positionierverfahren") beschrieben. Danach wird anhand von Fig. 4 und Fig. 5 ein Präzisions-Positionierverfahren beschrieben. Ein und dieselbe Schweißvorrichtung 100 kann so ausgelegt und eingerichtet sein, dass sie sowohl ein Einfach-Positionierverfahren und/oder ein Präzisions-Positionierverfahren oder auch weitere Positionierverfahren durchführen kann, zwischen denen beispielsweise ein Benutzer frei wählen kann.

Wie im Vorangehenden beschrieben wurde, ist es auch möglich, dass eine übergeordnete Steuerinstanz, beispielsweise eine sogenannte System-Steuereinrichtung, eines der an der Schweißvorrichtung 100 verfügbaren Positionierverfahren auswählt. Dies kann beispielsweise abhängig von einer zur Verfügung stehenden Zeitspanne erfolgen, sodass insbesondere das präziseste, in der verfügbaren Zeitspanne durchführbare Positionierverfahren durchgeführt werden kann.

Die grundlegende Überlegung des Einfach-Positionierverfahrens ist in Fig. 2 dargestellt. Die Unterfiguren a) bis d) von Fig. 2 zeigen verschiedene Zeitpunkte t = t1, t = t2, t = t3, t = t4, wobei t1<t2<t3<t4 gilt. Die Unterfiguren a) bis d) von Fig. 2 zeigen jeweils die Drahtelektrode 1, wie sie sich mit einer Vorschubgeschwindigkeit V0 nach vorne, das heißt in Richtung des Kontaktrohrendes 142 bewegt, und zwar zunächst lediglich innerhalb der Seele 3, später dann teilweise innerhalb des Kontaktrohrs 141 und am Schluss (t = t4) darüber hinaus, sodass eine freie Drahtelektrodenlänge S ("Stickouf") entsteht.

In Fig. 2a), zum Zeitpunkt t = t1, ist gezeigt, wie sich die Drahtelektrode 1 mit der Fördergeschwindigkeit V0 innerhalb der Seele 3 in Richtung des Kontaktrohrendes 142 vorwärtsbewegt.

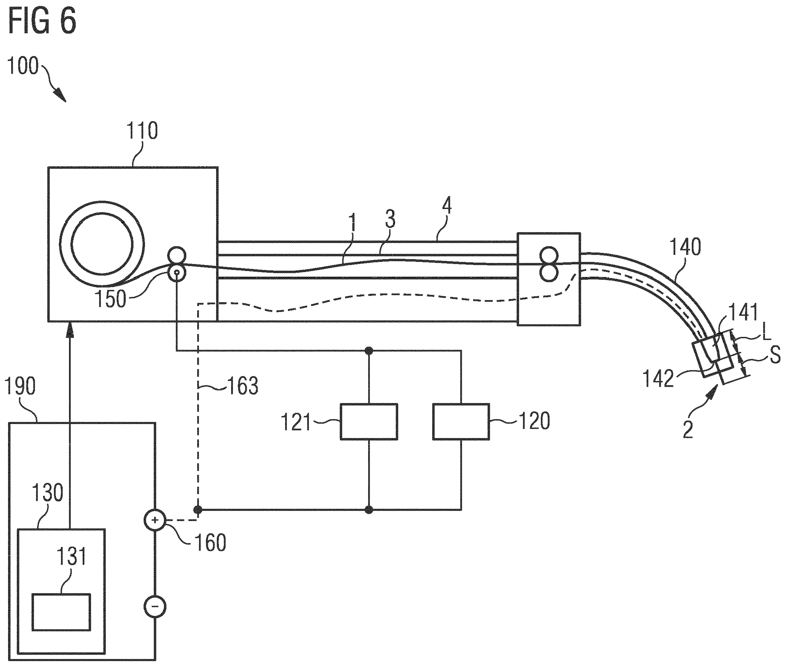

Fig. 3 zeigt in den Unterfiguren a) bis c) jeweils eine charakteristische Kurve zur Erläuterung des Positionierverfahrens aus Fig. 2, wobei die Zeitpunkte t1, t2, t3 und t4 jeweils auch eingezeichnet sind. Fig. 3a) zeigt eine Drahtposition x als Funktion der Zeit t, wobei die Drahtposition x von einem beliebigen Nullpunkt innerhalb der Seele aus dargestellt ist. Fig. 3b) zeigt eine Fördergeschwindigkeit, mit welcher die Drahtelektrode 1 durch die Fördereinrichtung 110 bewegt wird, als Funktion der Zeit t. Fig. 3c) zeigt schließlich eine durch die Spannungsmesseinrichtung 120 gemessene Spannung U als Funktion der Zeit t zwischen der Drahtelektrode 1 und der Referenzelektrode 160. Bei dem in Fig. 1 gezeigten Fall ist die Referenzelektrode 160 mit Masse GND verbunden. Es versteht sich, dass auch andere Referenzelektroden 160 verwendet werden können, wie im Vorangehenden bereits beschrieben wurde und wie im Nachfolgenden auch mit Bezug auf Fig. 6 noch zusätzlich erläutert werden wird.

Wie aus dem Vergleich von Fig. 2 und Fig. 3 ersichtlich ist, bewegt sich die Drahtelektrode 1 zum Zeitpunkt t1 mit der konstanten Geschwindigkeit V0 und somit linearem Anstieg in der Drahtposition x vorwärts, während die Spannung U auf null verharrt. Zum Zeitpunkt t2 berührt die Drahtelektrode 1 zum ersten Mal das elektrische Kontaktrohr 141, welches auf dem positiven Potenzial der Schweißstromquelle 190 (Schweißplus) liegt. Dieses elektrische Potenzial liegt somit unmittelbar auch an der Drahtelektrode 1 an, was in Fig. 3c) durch den jähen Anstieg des Spannungsniveaus zum Zeitpunkt t2 ersichtlich ist. Theoretisch ist zu diesem Zeitpunkt nun die Position der Drahtelektrode 1 bereits bekannt. Die Steuereinrichtung 130 kann somit, unter Verwendung der bekannten Kontaktrohrlänge L bestimmen, dass, um die gewünschte freie Drahtelektrodenlänge S bereitzustellen, die Drahtelektrode 1 ab dem Zeitpunkt t = t2 noch genau um die Länge L + S gefördert werden muss. In einem einfachen Fall kann die Steuereinrichtung 130 nun dazu eingerichtet sein, entsprechende Anweisungen in entsprechenden Steuersignalen an die Fördereinrichtung 110 zu übermitteln.

Wie in Fig. 3 jedoch außerdem dargestellt ist, kann es aufgrund einer Signalverzögerung Δt dazu kommen, dass die Steuereinrichtung 130 erst zum Zeitpunkt t3, t3=t2+ Δt, von dem durch die Spannungsmesseinrichtung 120 gemessenen Spannungsanstieg bei Zeitpunkt t2 erfährt. Diese Signalverzögerung Δt bewirkt somit, dass der Steuerbefehl, die Drahtelektrode 1 noch um L + S zu fördern, beispielsweise tatsächlich erst, wie in Fig. 2c) gezeigt, zum Zeitpunkt t3 ergeht, an welchem die Drahtelektrode 1 schon ein Stück Δx in das Kontaktrohr 141 vorgedrungen ist.

Die genannte Signalverzögerung Δt zwischen der Messung der Spannungsänderung bei t2 und der Verarbeitung durch die Steuereinrichtung 130 kann auch noch erweitert werden um die Betrachtung, mit welcher Signalverzögerung die Steuerbefehle tatsächlich bei der Fördereinrichtung 110 ankommen. Es ist ersichtlich, dass die genannten Signalverzögerungen eine (geringe, aber dennoch unerwünschte) Abweichung der tatsächlich vorliegenden freien Drahtelektrodenlänge S von dem gewünschten und definierten Sollwert bewirken. Die Steuereinrichtung 130 kann deshalb dazu eingerichtet sein, die genannte Signalverzögerung zu berücksichtigen und bei der Erzeugung der Steuersignale, insbesondere bei der Berechnung der noch zu fördernden Drahtelektrodenlänge, zu berücksichtigen, insbesondere zu kompensieren. Wie im Vorangehenden bereits erläutert wurde, kann ein Signalverzögerungswert, welcher die Signalverzögerung indiziert, durch ein Laufzeit-Bereitstellungsmodul 131 der Steuereinrichtung bereitgestellt werden.

Je genauer der Signalverzögerungswert Δt vorbestimmt oder sogar dynamisch oder regelmäßig ermittelt wurde, desto genauer kann die Signalverzögerung kompensiert werden und somit der definierte und gewünschte Sollwert für die freie Drahtelektrodenlänge S möglichst genau erreicht werden.

Im Nachfolgenden wird anhand von Fig. 4 und Fig. 5 ein Präzisions-Positionierverfahren beschrieben werden, welches beispielsweise ebenfalls durch die Schweißvorrichtung 110 gemäß Fig. 1 durchgeführt werden kann, entweder alternativ zu oder wahlweise alternativ zu dem Einfach-Positionierverfahren gemäß Fig. 2 und Fig. 3.

Fig. 4 mit Unterfiguren a) bis g) stellt schematisch dieselbe Situation wie Fig. 2 dar, nämlich die jeweilige Position der Drahtelektrode 1, welche ausgehend von der Seele 3 in Richtung Kontaktrohr 141 gefördert wird und wie das Präzisions-Positionierverfahren dabei abläuft. Fig. 5a) bis c) stellen, bezogen auf das Präzisions-Positionierverfahren, dieselben Graphen dar wie dies Fig. 3a) bis c) mit Bezug auf das Einfach-Positionierverfahren tun.

Die grundlegende Überlegung hinter dem Präzisions-Positionierverfahren ist diejenige, dass der bei dem Einfach-Positionierverfahren bestehende Positionierfehler der Drahtelektrode 1 im Wesentlichen linear mit der Geschwindigkeit V0 der Drahtelektrode 1 skaliert. Während nun eine besonders hohe Geschwindigkeit V der Drahtelektrode 1 zum Positionieren der Drahtelektrode 1 bevorzugt wird, damit nämlich das Positionierverfahren möglichst schnell durchgeführt und abgeschlossen werden kann, wäre es für eine besonders präzise Positionierung im Gegenteil dazu von Vorteil, wenn die Vorschubgeschwindigkeit V besonders gering wäre, um den Positionsfehler Δx aufgrund des Laufzeitfehlers (Signalverzögerung Δt) weiter zu verringern. Das oben beschriebene Verfahren zum Kompensieren dieses Fehlers mittels des Signalverzögerungswerts kann selbstverständlich zusätzlich angewendet werden.

Die Idee hinter dem Präzisions-Positionierverfahren ist daher diejenige, dass zunächst in einem ersten, groben Schritt, welcher bei einer verhältnismäßig hohen, positiven ersten Fördergeschwindigkeit V1 durchgeführt wird, die Position der Drahtelektrode, insbesondere des Drahtelektrodenendes 2, grob bestimmt wird. Dies geschieht wiederum durch die Messung einer Spannungsänderung mittels der Spannungsmesseinrichtung 120 zwischen der Drahtelektrode 1 und der Referenzelektrode 160. Dies ist in den Figuren Fig. 4a) und Fig. 4b) sowie den Zeitpunkten t =t1 und t = t2 gezeigt, welche zu den Vorgängen in Fig. 2a) und Fig. 2b) analog sind.

Daraufhin wird, wiederum mit einer gewissen Signalverzögerung, durch die Steuereinrichtung 130 die Fördereinrichtung 110 angewiesen, die Drahtelektrode 1 anzuhalten und sich mit einer zweiten Geschwindigkeit R2 rückwärts zu bewegen. Die Rückwärtsbewegung beginnt beim Zeitpunkt t = t3 und dauert während des Zeitpunkts t = t4 weiter an. Da die Drahtelektrode 1 hierbei weiterhin in elektrischem Kontakt mit dem Kontaktrohr 141 steht, bleibt die von der Spannungsmesseinrichtung 120 gemessene Spannung U weiterhin von Null verschieden, während sich die Drahtposition x langsam verringert. Dies geschieht solange, bis sich, an einem Zeitpunkt t5 wie in Fig. 4e) gezeigt ist, die Drahtelektrode 1 gerade wieder elektrisch von dem Kontaktrohr 141 löst, was wiederum einen Spannungseinbruch der Spannung U auf Null zur Folge hat, wie in Fig. 5c) zum Zeitpunkt t5 ersichtlich ist.

Das Zurückziehen mit der zweiten, negativen Geschwindigkeit R2 dient dazu, die Drahtelektrode 1 möglichst genau kurz von dem Kontaktpunkt mit dem Kontaktrohr 141 zu re-positionieren, damit die aus dem Einfach-Positionierverfahren bereits bekannten Schritte nochmals, jedoch mit erhöhter Präzision durchgeführt werden können. Daher ist es bevorzugt, dass die zweite Geschwindigkeit R2, welche negativ ist, betragsmäßig kleiner als die erste Geschwindigkeit V1, welche positiv ist, gewählt ist, insbesondere betragsmäßig weniger als 50 %, besonders bevorzugt weniger als 10 %, besonders bevorzugt weniger als 5 % des Betrags der ersten Geschwindigkeit V1 ausmacht.

Zum Zeitpunkt t5 wird die Fördereinrichtung 110 durch die Steuereinrichtung 130 wiederum angewiesen, die Drahtelektrode 1 vorwärts zu fördern, und zwar mit einer dritten Geschwindigkeit V3, welche positiv und betragsmäßig kleiner als die erste Geschwindigkeit V1 ist. Die dritte Geschwindigkeit V3 kann betragsmäßig gleich der zweiten Geschwindigkeit R2 sein, oder sogar noch kleiner als diese. Beispielsweise kann die erste Geschwindigkeit bis zu 150m/min betragen, die zweite Geschwindigkeit bis zu 100 m/min betragen und/oder die dritte Geschwindigkeit bis zu 75 m/min betragen.

Vom Zeitpunkt t5 an wird prinzipiell dasselbe Verfahren wie mit dem Einfach-Positionierverfahren durchgeführt, mit dem Unterschied, dass die Ausgangsgeschwindigkeit nun nicht die ursprüngliche Vorwärtsfördergeschwindigkeit V1 (bzw. V0 in Fig. 2 und Fig. 3) ist, sondern die geringere Geschwindigkeit V3. Der entsprechende Laufzeitfehler, welcher natürlich auch bei der Förderung mit der zweiten Geschwindigkeit R2 und der Förderung mit der dritten Geschwindigkeit V3 vorliegt, kann daher im Prinzip vernachlässigt werden und ist in Fig. 5 auch nicht näher dargestellt. Prinzipiell ist es jedoch, wie gesagt, möglich, auch bei dem Präzisions-Positionierverfahren zusätzlich auch noch Laufzeitunterschiede zu berücksichtigen, indem das Laufzeit-Bereitstellungsmodul 131 einen entsprechenden Signalverzögerungswert bereitstellt, welchen die Steuereinrichtung 130 dann kompensiert.

Zum Zeitpunkt t6 wird nun wiederum ein elektrischer Kontakt zwischen der Drahtelektrode 1 und dem Kontaktrohr 141 hergestellt, sodass die Spannung U wiederum auf den nichtverschwindenden Wert Us ansteigt. Aufgrund der geringen Geschwindigkeit V3 ist somit der Steuereinrichtung 130 sehr genau die aktuelle Position des Drahtelektrodenendes 2 bekannt. Die Steuereinrichtung 130 kann daher der Fördereinrichtung 110 entsprechende Steuersignale übermitteln, um die Drahtelektrode 1 weiter vorwärts zu fördern, bis die gewünschte freie Drahtelektrodenlänge S eingestellt ist.

Wie in Fig. 5b) gezeigt ist, kann dies zunächst weiterhin mit der dritten (Vorwärts-)geschwindigkeit V3 erfolgen. Diese Geschwindigkeit kann bis zum Ende des Präzisions-Positionierverfahrens beibehalten werden. Alternativ kann, wie in Fig. 4b) gezeigt ist, die finale Einstellung mit einer vierten positiven Geschwindigkeit V4 durchgeführt werden, um das Präzisions-Positionierverfahren noch schneller beenden zu können. Die vierte Geschwindigkeit V4 ist daher bevorzugt größer als die dritte Geschwindigkeit V3.

Die dritte Geschwindigkeit V3 kann besonders bevorzugt stetig und monoton steigend in die vierte Geschwindigkeit V4 übergehen. Die vierte Geschwindigkeit V4 kann so gewählt werden, dass etwaige Ungenauigkeiten bei der Beschleunigung und Abbremsung der Drahtelektrode 1 in derselben Größenordnung wie der Signalverzögerungsfehler liegen. Je genauer daher eine Beschleunigung und Abbremsung der Drahtelektrode 1 durch die Fördereinrichtung 110 möglich ist, desto höher kann die vierte Geschwindigkeit V4 gewählt werden, beispielsweise bis hin zu V4 = V1.

Fig. 6 zeigt eine schematische Darstellung einer weiteren möglichen Ausführungsform der vorliegenden Erfindung. Bei der in Fig. 6 gezeigten Ausführungsform besteht ein Unterschied darin, dass die Spannungsmesseinrichtung 120 nicht zum Messen einer Spannung zwischen der Drahtelektrode 1 und Masse GND ausgebildet ist. Stattdessen ist die Spannungsmesseinrichtung 120 mit einer Messspannungsquelle 121 parallelgeschaltet sowie zwischen der Drahtelektrode 1 (über die Drahtelektrode-Kontakteinrichtung 150) und einer Referenzelektrode 160 in Reihe geschaltet. Die Referenzelektrode 160 liegt hier auf dem elektrischen Potenzial der positiven Elektrode 161 der Schweißstromquelle 190. Die Messspannungsquelle 121 kann in der Stromquelle 190 verbaut bzw. integriert sein, aber auch extern angeordnet sein bzw. extern anliegen. Da nicht eine Messung nicht ständig nötig ist (insbesondere nicht während des Schweißvorgangs), kann die Messspannungsquelle 121 zu- und wegschaltbar ausgebildet sein. Beispielsweise kann vorgesehen sein, dass die Messspannungsquelle 121 während eines Schweißvorgangs (bevorzugt automatisch) weggeschaltet wird und am Ende des Schweißvorgangs (insbesondere wenn danach eine Repositionierung eines Schweißroboters stattzufinden hat) automatisch wieder zugeschaltet werden.

Solange die Drahtelektrode 1 elektrisch nicht mit dem Kontaktrohr 141 in Kontakt steht, wird die Spannungsmesseinrichtung 120 die von der Messspannungsquelle 121 ausgegebene Messspannung (oder: Hilfsspannung) messen. Geeignete Werte für diese Messspannung betragen zwischen 3V Volt und 60V Volt. Sobald ein elektrischer Kontakt zwischen Drahtelektrode 1 und Kontaktrohr 141 hergestellt ist, tritt stattdessen ein Kurzschluss auf und wird durch die Spannungsmesseinrichtung 120 detektiert.

Zum Detektieren der Position des Drahtelektrodenendes 2 kann somit bei dieser Ausführungsform ein Spannungsabfall auf Null (Kurzschluss) verwendet werden. Dementsprechend können insbesondere auch das Einfach-Positionierverfahren gemäß Fig. 2 und Fig. 3 und das Präzisions-Positionierverfahren gemäß Fig. 4 und Fig. 5 bei der Ausführungsform gemäß Fig. 6 analog angewendet werden.

Statt einer Spannungsmesseinrichtung 120 könnte bei der Variante aus Fig. 6 auch eine Strommesseinrichtung verwendet werden. Statt einer Spannungsänderung könnte dementsprechend auch eine Stromänderung gemessen werden, und zwar im vorliegenden Fall ein Stromanstieg, sobald die Drahtelektrode 1 das Kontaktrohr 141 berührt.

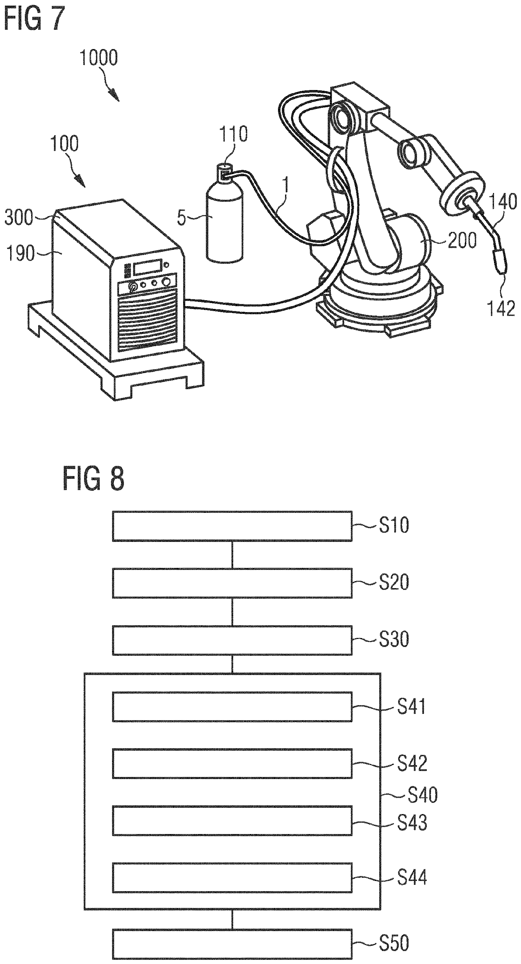

Fig. 7 zeigt ein schematisches Blockschaltbild eines Roboter-Schweißsystems 1000 gemäß noch einer weiteren Ausführungsform der vorliegenden Erfindung.

Das Roboter-Schweißsystem 1000 umfasst eine Schweißvorrichtung 100 gemäß einer Ausführungsform der vorliegenden Erfindung, insbesondere wie sie in den vorangehenden Fig. 1 bis 6 beschrieben wurde. Das Roboter-Schweißsystem 1000 umfasst außerdem eine Robotereinrichtung 200, welche zum Führen des Schweißbrenners 140 der Schweißvorrichtung 100 eingerichtet ist. Im vorliegenden Beispiel ist die Robotereinrichtung 200 als ein etwa mannsgroßer Roboterarm ausgebildet. Die Fördereinrichtung 110 der Schweißvorrichtung 100 ist beispielhaft an einem Fass als Drahtspender 5 angeordnet und entnimmt diesem die Drahtelektrode 1 zur Förderung.

Das Roboter-Schweißsystem 1000 weist außerdem eine System-Steuereinrichtung 300 auf, welche dazu eingerichtet ist, sowohl Steuersignale zum Steuern der Robotereinrichtung 200 zu erzeugen zu übermitteln als auch Steuersignale zum Steuern der Steuereinrichtung 130 der Schweißvorrichtung 100 zu erzeugen und zu übermitteln. Wie in Fig. 7 gezeigt ist, kann die System-Steuereinrichtung 300 in ein Gehäuse der Schweißstromquelle 190 der Schweißvorrichtung 100 integriert sein und kann beispielsweise auch in die Steuereinrichtung 130 der Schweißvorrichtung 100 integriert sein. Alternativ kann die System-Steuereinrichtung 300 auch in die Robotereinrichtung 200 integriert sein oder separat ausgebildet sein, z.B. durch eine zusätzliche Recheneinrichtung wie etwa eine Cloud-Computing-Plattform.

Die Steuereinrichtung 130 der Schweißvorrichtung 100 ist dazu eingerichtet, unter (d.h.: zusammen mit) den Steuersignalen von der System-Steuereinrichtung 300 ein Positionierverfahren-Auslösesignal von der System-Steuereinrichtung 300 zu erhalten, als Reaktion auf welches die Steuereinrichtung 130 eines des mindestens einen Positionierverfahrens durchführt.

Vorteilhaft wird das Positionierverfahren durchgeführt, während sich die Robotereinrichtung 200 im Transit zwischen zwei Positionen befindet, an denen die Schweißvorrichtung 100 zum Schweißen gesteuert wird, wobei während des Transits kein Schweißen stattfindet. Das Positionierverfahren wird somit bevorzugt in einer Totzeit eines Schweiß-Ablaufplans durchgeführt, und zwar insbesondere mit einem solchen Positionierverfahren, welches die gemäß Schweiß-Ablaufplan vorhandene Totzeit ausnutzt, um die maximale Präzision beim Einstellen des Stickouts zu erhalten.

Fig. 8 zeigt ein schematisches Flussdiagramm zum Erläutern eines Verfahrens gemäß noch einer Ausführungsform der vorliegenden Erfindung. Das gemäß Fig. 7 erläuterte Verfahren ist insbesondere mit einer Schweißvorrichtung oder einem Roboter-Schweißsystem gemäß einer Ausführungsform der vorliegenden Erfindung durchführbar, insbesondere gemäß einer Schweißvorrichtung 100 oder einem Roboter-Schweißsystem 1000, wie sie in einer der Fig. 1 bis Fig. 8 beschrieben wurden. Das Verfahren ist daher gemäß jeder beschriebenen Option, Variante, oder Weiterbildung der Ausführungsformen der erfindungsgemäßen Schweißvorrichtung und/oder des erfindungsgemäßen Roboter-Schweißsystems anpassbar und umgekehrt.

In einem Schritt S10 wird eine gewünschte freie Drahtelektrodenlänge S der Drahtelektrode 1 definiert, beispielsweise durch eine Parameterausgabe eines Schweiß-Ablaufplans, eine Benutzereingabe, eine Voreinstellung und/oder dergleichen.

In einem Schritt S20 wird eine Spannung zwischen der Drahtelektrode 1 und einer Referenzelektrode 160 gemessen, insbesondere kontinuierlich überwacht. Wie im Vorangehenden beschrieben wurde, kann die Referenzelektrode 160 beispielsweise auf Masse GND liegen oder auf dem Schweißminus, auf dem Schweißplus, oder auch auf einem anderen definierten Potenzialwert. Entscheidend ist, dass eine Spannungsänderung der gemessenen oder überwachten Spannung bei Kontakt der Drahtelektrode 1 mit einem elektrischen Kontaktpunkt detektiert werden kann, wobei der Abstand entlang des Pfades der Drahtelektrode 1 zwischen dem Kontaktpunkt und dem Kontaktrohrende 142 bekannt ist.

In einem Schritt S30 wird die Drahtelektrode 1 in Richtung eines Kontaktrohrs 141 gefördert, genauer gesagt: in Richtung des Kontaktrohrendes 142. Falls das Drahtelektrodenende 2 bereits in das Kontaktrohr 141 eingeführt ist, kann dies an der gemessenen Spannung festgestellt werden. Daraufhin kann das Drahtelektrodenende 2 vor Durchführen der weiteren Schritte zunächst mittels der Fördereinrichtung 110 zurückgezogen werden, bis es wieder außerhalb des Kontaktrohrs 141 liegt, ähnlich wie dies bei dem im Vorangehenden beschriebenen Präzisions-Positionierverfahren erfolgt.

In einem Schritt S40 wird eine aktuelle Position des Drahtelektrodenendes 2 der Drahtelektrode 1 basierend auf einer gemessenen Spannungsänderung der gemessenen Spannung ermittelt, während die Drahtelektrode 1 gefördert wird, insbesondere eine Spannungsänderung von Null auf das Referenzpotenzial der Referenzelektrode 160 oder von dem Referenzpotenzial auf Null.

In einem Schritt S50 wird die Drahtelektrode 1 basierend auf der ermittelten aktuellen Position gefördert, bis zwischen dem Drahtelektrodenende 2 und dem Kontaktrohrende 142 die definierte freie Drahtelektrodenlänge S vorliegt.

Das Erfassen S40 der aktuellen Position des Drahtelektrodenendes 2 kann insbesondere gemäß dem im Vorangehenden beschriebenen Einfach-Positionierverfahren und/oder gemäß dem im Vorangehenden beschriebenen Präzisions-Positionierverfahren erfolgen.

Das Präzisions-Positionierverfahren kann insbesondere ablaufen wie mit Bezug auf Fig. 4 und Fig. 5 erläutert wurde und kann dazu die folgenden Schritte umfassen:
In einem Schritt S41 wird eine erste Spannungsänderung erfasst (z.B. von Us auf 0 in Fig. 5c) zum Zeitpunkt t2), während die Drahtelektrode 1 mit einer ersten Geschwindigkeit V1 vorwärts zu dem Kontaktrohrende 142 hin gefördert wird.

In einem Schritt S42 wird die Drahtelektrode 1 mit einer zweiten Geschwindigkeit R2 rückwärts gefördert zumindest bis (vorteilhaft etwas darüber hinaus) eine zweite Spannungsänderung erfasst wird (z.B. von 0 auf Us in Fig. 5c) zum Zeitpunkt t5).

In einem Schritt S43 wird die Drahtelektrode 1 mit einer dritten Geschwindigkeit V3 vorwärts gefördert zumindest bis eine dritte Spannungsänderung erfasst wird (z.B. von 0 auf Us wie in Fig. 5c) zum Zeitpunkt t6).

Das Ermitteln S40 der aktuellen Position des Drahtelektrodenendes 2 basiert zumindest auf einer Messung, mit welcher die dritte Spannungsänderung erfasst wurde, wobei die dritte Geschwindigkeit V3 vorzugsweise geringer als die erste Geschwindigkeit V1 ist (V3<V1). Insbesondere kann der Zeitpunkt t6 der dritten Spannungsänderung mit der Position des Drahtelektrodenendes 2 an einem definierten elektrischen Kontaktpunkt (z.B. Beginn des Kontaktrohrs 141) assoziiert werden. Zusammen mit einer Information über einen Abstand des Kontaktpunkts zu der gewünschten Position des Drahtelektrodenendes 2 (z.B. Kontaktrohrlänge L plus Stickout S) kann somit in einem Schritt S44 bestimmt werden, wie weit die Drahtelektrode 1 nach dem Zeitpunkt t6 noch zu fördern ist oder war. In dem Schritt S50 kann dann die entsprechende Förderung durch die Fördereinrichtung 110 durchgeführt werden, z.B. mit einer vierten Geschwindigkeit V4, wobei bevorzugt:
- V4 > V3
- V4 < V1 oder V4=V1, und/oder
- |V4|>|R2| gilt.

Im Zusammenhang mit einem Roboter-Schweißsystem 1000, beispielsweise wie im Zusammenhang mit Fig. 7 beschrieben wurde, kann das Verfahren optional weitere Schritte aufweisen. Beispielsweise können in einem Schritt S60 Informationen über eine bevorstehende Totzeit der Schweißvorrichtung 100 empfangen werden. In einem Schritt S70 kann basierend auf der bevorstehenden Totzeit (z.B. beim Bewegen der Robotereinrichtung 200 zum Beginn des nächsten Schweißprozesses) ein Präzisions-Positionierverfahren ausgewählt werden, welches daraufhin durchgeführt wird, etwa das Einfach-Positionierverfahren und/oder das Präzisions-Positionierverfahren. Das Auswählen erfolgt vorzugsweise nach dem Kriterium, dass das präziseste Positionierverfahren gewählt werden soll, welches innerhalb der Totzeit vollständig durchführbar ist.

In Varianten des Verfahrens kann jedoch auch bestimmt werden, dass zwischen zwei Schweißprozessen immer ein Positionierverfahren durchgeführt werden soll, und dass die Totzeit (d.h. die schweißungsfreie Zeit) verlängert wird, um zu gewährleisten, dass ein gewünschtes Positionierverfahren vollständig durchgeführt werden kann.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. Es versteht sich weiterhin, dass als separate beschriebene Einheiten teilweise ineinander integriert sein können.

Die Erfindungsidee kann wie folgt beschrieben werden: Die Erfindung stellt eine Schweißvorrichtung 100 sowie ein Verfahren zum Fördern einer Drahtelektrode 1 in eine Position mit einer definierten freien Drahtelektrodenlänge S ab einem Kontaktrohr 141 (insbesondere Kontaktrohrende 142) eines Schweißbrenners 140 einer Schweißvorrichtung 100 bereit. Eine Information über eine Spannungsänderung zwischen der Drahtelektrode 1 einerseits und einer Referenzelektrode 160 andererseits wird dazu verwendet, um eine Position des Drahtelektrodenendes 2 zum Zeitpunkt der Spannungsänderung zu bestimmen. Daraufhin kann die Drahtelektrode präzise in die gewünschte Position gefördert werden.

### Bezugszeichenliste

- 1: Drahtelektrode
- 2: Drahtelektrodenende
- 3: Seele
- 4: Schlauchpaket
- 5: Drahtspender
- 100: Schweißvorrichtung
- 110: Fördereinrichtung
- 120: Spannungsmesseinrichtung
- 121: Messspannungsquelle
- 130: Steuereinrichtung
- 140: Schweißbrenner
- 141: Kontaktrohr
- 142: Kontaktrohrende
- 160: Referenzelektrode
- 161: Elektrode
- 163: Leitungen
- 170: Werkstück
- 190: Schweißstromquelle
- 200: Robotereinrichtung
- 300: System-Steuereinrichtung
- 1000: Roboter-Schweißsystem

- L: Kontaktrohrlänge
- S: freie Drahtelektrodenlänge vor dem Kontaktrohr
- S10..S50: Verfahrensschritte
- tl..t6: Zeitpunkte

## Patentansprüche

1. Schweißvorrichtung (100), mit:
einer Fördereinrichtung (110) zum Fördern einer Drahtelektrode (1) der Schweißvorrichtung (100);
einer Drahtelektrode-Kontakteinrichtung (150) zum elektrischen Kontaktieren der Drahtelektrode (1);
einer Referenzelektrode (160), welche elektrisch mit einem Referenz-Potenzial verbunden oder verbindbar ist;
eine elektrische-Parameter-Messeinrichtung (120), welche zum Messen eines elektrischen Parameters zwischen der Drahtelektrode-Kontakteinrichtung (150) und der Referenzelektrode (160) eingerichtet ist; und
einer Steuereinrichtung (130), welche zum Durchführen mindestens eines Positionierverfahrens eingerichtet ist, wobei in dem mindestens einen Positionierverfahren die Drahtelektrode (1) durch die Fördereinrichtung (110) in eine Position mit einer definierten freien Drahtelektrodenlänge (S) ab einem Kontaktrohrende (142) eines Schweißbrenners (140) der Schweißvorrichtung (100) gefördert wird, indem die Steuereinrichtung (130) dazu eingerichtet ist, zum Durchführen des mindestens einen Positionierverfahrens:
- eine aktuelle Position eines Drahtelektrodenendes (2) der Drahtelektrode (1) basierend auf mindestens einer Messung zu ermitteln, in welcher eine Änderung des durch die elektrische-Parameter-Messeinrichtung (120) gemessenen elektrischen Parameters erfasst wird, während die Drahtelektrode (1) durch die Fördereinrichtung (110) gefördert wird; und
- die Fördereinrichtung (110) zu steuern, die Drahtelektrode (1) basierend auf der ermittelten aktuellen Position zu fördern, bis zwischen dem Drahtelektrodenende (2) und dem Kontaktrohrende (142) die definierte freie Drahtelektrodenlänge (S) vorliegt.

2. Schweißvorrichtung (100) nach Anspruch 1,
wobei die Referenzelektrode (160) elektrisch mit Masse (GND) verbunden oder verbindbar ist, und die elektrische-Parameter-Messeinrichtung eine Spannungsmesseinrichtung (120) aufweist, welche zumindest zum Messen einer Spannung zwischen der Drahtelektrode (1) und Masse (GND) eingerichtet ist.

3. Schweißvorrichtung (100) nach Anspruch 1,
wobei die Referenzelektrode (160) elektrisch mit einem Kontaktrohr (141) eines Schweißbrenners (140) der Schweißvorrichtung (100) verbunden oder verbindbar ist, und die elektrische-Parameter-Messeinrichtung eine Spannungsmesseinrichtung (120) aufweist, welche zumindest zum Messen einer Spannung zwischen der Drahtelektrode (1) und dem Kontaktrohr (141) eingerichtet ist.

4. Schweißvorrichtung (100) nach einem der Ansprüche 1 bis 3,
wobei die Drahtelektrode-Kontakteinrichtung (150) einen Schleifkontakt und/oder eine Antriebsrolle für die Drahtelektrode (1) aufweist.

5. Schweißvorrichtung (100) nach einem der Ansprüche 1 bis 4,
wobei die Steuereinrichtung (130) ein Laufzeit-Bereitstellungsmodul (131) aufweist, welches dazu eingerichtet ist, einen Signalverzögerungswert für Komponenten der Steuereinrichtung (130) bereitzustellen, wobei die Steuereinrichtung (130) dazu eingerichtet ist, bei dem Ermitteln der aktuellen Position des Drahtelektrodenendes (2) den bereitgestellten Signalverzögerungswert zu berücksichtigen.

6. Schweißvorrichtung (100) nach einem der Ansprüche 1 bis 5,
wobei die Steuereinrichtung (130) dazu eingerichtet ist, das Ermitteln der aktuellen Position des Drahtelektrodenendes (2) basierend auf mehreren Messungen von Änderungen des elektrischen Parameters durchzuführen.

7. Schweißvorrichtung (100) nach einem der Ansprüche 1 bis 6,
wobei das mindestens eine Positionierverfahren ein Präzisions-Positionierverfahren umfasst und die Steuereinrichtung dazu eingerichtet ist, in dem Präzisions-Positionierverfahren:
- mittels der elektrische-Parameter-Messeinrichtung (120) eine erste Änderung des elektrischen Parameters zu erfassen, während die Drahtelektrode mit einer ersten Geschwindigkeit (V1) durch die Fördereinrichtung (110) vorwärts zu dem Kontaktrohr (141) hin gefördert wird;
- danach die Fördereinrichtung (110) zu steuern, die Drahtelektrode (1) mit einer zweiten Geschwindigkeit (R2) rückwärts zu fördern zumindest bis mittels der elektrische-Parameter-Messeinrichtung (120) eine zweite Änderung des elektrischen Parameters erfasst wird;
- danach die Fördereinrichtung (110) zu steuern, die Drahtelektrode (1) mit einer dritten Geschwindigkeit (V3) vorwärts zu fördern bis mittels der elektrische-Parameter-Messeinrichtung (120) eine dritte Änderung des elektrischen Parameters erfasst wird; und
- die aktuelle Position der Drahtelektrode (1) zumindest basierend auf einer Messung, mit welcher die dritte Änderung des elektrischen Parameters erfasst wurde, zu ermitteln,
wobei die dritte Geschwindigkeit (V3) vorzugsweise geringer als die erste Geschwindigkeit (V1) ist.

8. Schweißvorrichtung (100) nach Anspruch 7,
wobei die Steuereinrichtung (130) dazu eingerichtet ist, nach dem Ermitteln der aktuellen Position der Drahtelektrode (1) die Drahtelektrode (1) mit einer vierten Geschwindigkeit (V4) weiter vorwärts zu fördern bis zwischen dem Drahtelektrodenende (2) und dem Kontaktrohrende (142) die definierte freie Drahtelektrodenlänge vorliegt.

9. Roboter-Schweißsystem (1000),
umfassend eine Schweißvorrichtung (100) nach einem der Ansprüche 1 bis 7,
eine Robotereinrichtung (200), welche zum Führen des Schweißbrenners (140) der Schweißvorrichtung (100) eingerichtet ist; und
eine System-Steuereinrichtung (300), welche dazu eingerichtet ist, sowohl Steuersignale zum Steuern der Robotereinrichtung (200) zu erzeugen zu übermitteln als auch Steuersignale zum Steuern der Schweißvorrichtung (100) zu erzeugen und zu übermitteln;
wobei die Steuereinrichtung (130) der Schweißvorrichtung (100) dazu eingerichtet ist, unter den Steuersignalen ein Positionierverfahren-Auslösesignal von der System-Steuereinrichtung (300) zu erhalten, als Reaktion auf welches die Steuereinrichtung (130) eines des mindestens einen Positionierverfahrens durchführt.

10. Roboter-Schweißsystem (1000) nach Anspruch 9,
wobei das Positionierverfahren durchgeführt wird, während sich die Robotereinrichtung (200) im Transit zwischen zwei Positionen befindet, an denen die Schweißvorrichtung (100) zum Schweißen gesteuert wird, wobei während des Transits kein Schweißen stattfindet.

11. Verfahren zum Fördern einer Drahtelektrode (1) in eine Position mit einer definierten freien Drahtelektrodenlänge (S) ab einem Kontaktrohr (141) eines Schweißbrenners (140) einer Schweißvorrichtung (100), umfassend:
- Definieren (S10) einer gewünschten freien Drahtelektrodenlänge (S) der Drahtelektrode (1);
- Messen (S20) eines elektrischen Parameters zwischen der Drahtelektrode (1) und einer Referenzelektrode (160);
- Fördern (S30) der Drahtelektrode (1) in Richtung eines Kontaktrohrs (141);
- Ermitteln (S40) einer aktuellen Position eines Drahtelektrodenendes (2) der Drahtelektrode (1) basierend auf einer gemessenen Änderung des gemessenen elektrischen Parameters, während die Drahtelektrode (1) gefördert wird;
- Fördern (S50) der Drahtelektrode (1) basierend auf der ermittelten aktuellen Position, bis zwischen dem Drahtelektrodenende (2) und dem Kontaktrohrende (142) die definierte freie Drahtelektrodenlänge (S) vorliegt.

12. Verfahren nach Anspruch 11,
wobei die Referenzelektrode (160) elektrisch mit Masse (GND) verbunden oder verbindbar ist, und zum Messen des elektrischen Parameters ein Messen (S20) der Spannung zwischen der Drahtelektrode (1) und Masse (GND) durchgeführt wird.

13. Verfahren nach Anspruch 12,
wobei die Referenzelektrode (160) elektrisch mit einem Kontaktrohr (141) des Schweißbrenners (140) der Schweißvorrichtung (100) verbunden oder verbindbar ist, und zum Messen des elektrischen Parameters ein Messen (S20) der Spannung zwischen der Drahtelektrode (1) und dem Kontaktrohr (141) durchgeführt wird.

14. Verfahren nach einem der Ansprüche 11 bis 13, umfassend:
- Erfassen (S41) einer ersten Änderung des elektrischen Parameters, während die Drahtelektrode (1) mit einer ersten Geschwindigkeit (V1) vorwärts zu dem Kontaktrohrende (142) hin gefördert wird;
- Fördern (S42) der Drahtelektrode (1) mit einer zweiten Geschwindigkeit (R2) rückwärts zumindest bis eine zweite Änderung des elektrischen Parameters erfasst wird;
- Fördern (S43) der Drahtelektrode (1) mit einer dritten Geschwindigkeit (V3) vorwärts zumindest bis eine dritte Änderung des elektrischen Parameters erfasst wird; und
- Ermitteln (S40) der aktuellen Position des Drahtelektrodenendes (2) zumindest basierend auf einer Messung, mit welcher die dritte Änderung des elektrischen Parameters erfasst wurde,
wobei die dritte Geschwindigkeit (V3) vorzugsweise geringer als die erste Geschwindigkeit (V1) ist.

15. Verfahren nach Anspruch 14,
wobei nach dem Ermitteln(S50) der aktuellen Position des Drahtelektrodenendes (2) die Drahtelektrode (1) mit einer vierten Geschwindigkeit (V4) vorwärts gefördert (S60) wird, bis zwischen dem Drahtelektrodenende (2) und dem Kontaktrohrende (142) die definierte freie Drahtelektrodenlänge (S) vorliegt.
